# EUROPEAN PATENT SPECIFICATION

(11) **EP 4 273 521 B1**
(45) Date of publication and mention of the grant of the patent: **02.10.2024**
(21) Application number: 22305650.8
(22) Date of filing: 02.05.2022
(51) Int. Cl.: G01H 3/10

(54) **AUTOMOTIVE GLAZING IMPACT DETECTION SYSTEM**
SYSTEM ZUR ERKENNUNG EINES AUFPRALLS AUF EINE AUTOGLASSCHEIBE
SYSTÈME DE DÉTECTION DES IMPACTS SUR LES VITRAGES AUTOMOBILES

(43) Date of publication of application: 08.11.2023
(73) Proprietor: Saint-Gobain Glass France, 92400 Courbevoie (FR)
(72) Inventor: MERCIER, Gérald, 60200 Compiegne (FR); ROSIER, Julie, 95430 Auvers-sur-Oise (FR); QI, Shuibao, 60200 Compiegne (FR)
(74) Representative: Saint-Gobain Recherche

(56) References cited:
- WO-A1-2021/013673
- US-A1- 2019 047 500
- US-A1- 2020 342 726

## Description

### Technical field

The present disclosure relates to the field of impact detection on an automotive glazing, and more specifically to a system for impact detection on an automotive glazing, a method of use of such system, and an automotive glazing system comprising an automotive glazing and the system for impact detection.

### Technical background

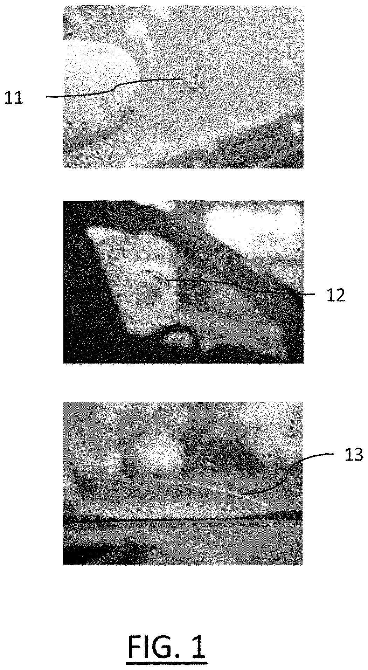

Environmental driving conditions on the road can generate some gravel and/or grit impact on a car and especially on the car windshield. The gravel damages made to the windshield depend on the impact location and can reduce the security capability of the windshield, as displayed for example in FIG. 1 which shows photographs of impacts 11, 12 and 13 on various windshields. Not only do such impacts pose a security risk, they also require maintenance and associated costs. In addition, fix costs can be increased if maintenance is not carried out just after an impact or crack detection.

Some glazing damage detection devices already exist on the market. Patent document WO2021013673 discloses a system for impact detection on an automotive glazing, the system comprising two or more vibration sensors, wherein both sensors are positioned either on the internal surface of the glazing, or on the external surface of the glazing, and a processing unit to post-process the measured impact vibration data for impact detection. Document US20200342726 discloses a similar system for the detection of impacts on an automotive glazing, comprising a plurality of vibration sensors that are positioned on an internal surface of an automotive glazing. Document US2019047500 discloses a similar system for the detection of impacts on an automotive glazing, comprising a vibration sensor positioned on an internal surface of an automotive windshield, on an external surface of the windshield, and/or is embedded within the windshield. Documents WO2021074041, WO2021013673, WO2022009180, EP3155504B1, WO2015189167 and EP3519760 also relate to this matter.

Within this context, there is still a need for an improved system for impact detection on an automotive glazing.

### Summary of the disclosure

It is therefore provided a system for impact detection on an automotive glazing. The system comprises at least one internal vibration sensor positioned on or in proximity to an internal surface of the automotive glazing. The system further comprises at least one external vibration sensor positioned on an external surface of the automotive glazing. The vibration sensors are configured to measure impact vibration data. The system further comprises a processing unit connected to the vibration sensors. The processing unit is configured to post-process the measured impact vibration data for impact detection.

The system may comprise one or more of the following features:
- the external vibration sensor and/or the internal vibration sensor comprise a conductive coating for electronic connection;
- the conductive coating is an Ag coating, a Cu coating, or an ITO coating;
- the internal vibration sensor is positioned on the frame of an automotive vehicle body;
- the processing unit is connected to an external server, computer and/or database by a wireless connection means;
- the wireless connection means includes a 4G or 5G chip;
- the wireless connection means is configured to transfer data by Hypertext Transfer Protocol (HTTP);
- the vibration sensors and processing unit are connected to a power supply;
- the power supply is one of a readily available power supply, a local battery, or an energy harvesting system;
- the power supply is configured to provide power on one side of the glazing, the other side of the glazing being powered through induction;
- each vibration sensor is connected to the processing unit by a wire connection or a conductive coating wired connection;
- the conductive coating wired connection is an Ag coating wired connection, a Cu coating wired connection, or an ITO coating wired connection; and/or
- the vibration sensors comprise a microphone and/or a strain gauge and/or an accelerometer, preferably a variable capacitance accelerometer, or a piezo-resistive accelerometer.

It is also provided a method of use of the system. The method of use is for impact detection on an automotive glazing. The method comprises, by the at least one internal sensor and the at least one external sensor, measuring impact vibration data. The method of use further comprises, by the processing unit, post-processing the measured impact vibration data for impact detection. Post-processing the measured impact vibration data may comprise applying any known method for determining the location of the impact based on the data measured by the sensors. Alternatively, post-processing the measured impact vibration data may comprise sending the data to an external server or computer which then performs the determination of the location of the impact.

It is also provided an automotive glazing system comprising an automotive glazing and the system for impact detection. The automotive glazing system may be provided as a kit comprising the automotive glazing and the system for impact detection, the glazing and the system being separated (i.e. the system is not yet fixed to the glazing). The kit may comprise a notice to assemble the system for impact detection to the glazing. Alternatively, the automotive glazing system may be provided with the system for impact detection fixed to the glazing, e.g. with the sensors and/or the processing unit fixed to the glazing (e.g. by use of a glue, or by welding).

### Brief description of the drawings

Non-limiting examples will now be described in reference to the accompanying drawings, where:
FIG. 1 shows examples of different types of cracks at different locations on a windshield; and
FIG. 2 shows an example of the system.

### Detailed description

It is provided a system for impact detection on an automotive glazing. The system comprises at least one internal vibration sensor positioned on or in proximity to an internal surface of the automotive glazing. The system further comprises at least one external vibration sensor positioned on an external surface of the automotive glazing. The vibration sensors are configured to measure impact vibration data. The system further comprises a processing unit connected to the vibration sensors. The processing unit is configured to post-process the measured impact vibration data for impact detection.

Such a system forms an improved solution for impact detection on an automotive glazing such as a windshield. The system enables improved impact detection on an automotive glazing in an efficient and cost-effective manner.

This is achieved by the system comprising at least one internal vibration sensor positioned on or in proximity to an internal surface of the automotive glazing and at least one external vibration sensor positioned on an external surface of the automotive glazing, the vibration sensors being configured to measure impact vibration data. Given that there is a vibration sensor positioned on either side of the glazing, each sensor can measure the different internal and external vibrations so as to more accurately measure the overall true vibration of the glazing itself that is caused by an impact. Since the impact location may be determined from the vibrations caused by the impact, as known *per se* in the art, obtaining such a more accurate measure of the vibration waves ultimately allows the determination of the impact location to be more accurate as well. In addition, vibration impact data measured by the at least one internal sensor can be a good reference for the on-track background vibration of the vehicle.

The system for impact detection on an automotive glazing of the present disclosure comprises:
- at least one internal vibration sensor positioned on or in proximity to an internal surface of the automotive glazing and at least one external vibration sensor positioned on an external surface of the automotive glazing, the vibration sensors being configured to measure impact vibration data ; and
- a processing unit connected to the vibration sensors, the processing unit being configured to post-process the measured impact vibration data for impact detection.

A system for *"impact detection"* on an automotive glazing refers to a system that detects an impact (e.g. a gravel and/or grit impact) to the automotive glazing. The impact may be an invisible impact. The impact may be one of a range of different types of impact and/or levels of impact, resulting in a different level of risk of breaking of the glass. The impact may be characterized by the magnitude of the force applied to the glazing. Additionally or alternatively, the impact may be characterized by the deformation experienced by the automotive glazing as a result of the impact. In other words, an impact can refer to the actual hit on the glazing, this hit being characterized by its force for example, but it can also refer to the consequence of this hit, i.e. a break on the glazing. The system may detect the actual hit, and/or may characterize the hit and/or the consequences of the hit on the glazing (e.g. hole, crack). The results of such an impact are illustrated for example on FIG. 1 which shows photographs of impacts 11, 12 and 13 on various windshields.

An *"automotive glazing"* refers to a glazing used in an automotive vehicle (e.g. a car). The glazing may be a laminated glazing, i.e. the glazing may comprise two or more layers of glass panels bonded together by an (e.g. plastic) interlayer. Alternatively, the glazing may be a monolithic glazing, i.e. a single lite of glass. The automotive glazing may be, for example, a windshield or sidelight of a car, or any another glazing of a vehicle.

A *"vibration sensor"* refers to a device used to detect mechanical vibrations resulting from an impact to the glazing. An *"internal vibration sensor"* refers to a vibration sensor located on the side of the glazing that forms part of the vehicle interior. An *"external vibration sensor"* refers to a vibration sensor located on the side of the glazing that forms part of the vehicle exterior. An internal vibration sensor positioned *"in proximity to an internal surface of the automotive glazing"* refers to a vibration sensor positioned inside the vehicle, at a distance to the side of the glazing that forms part of the vehicle exterior which is lower than a predefined maximal distance. The internal vibration sensor may for example be positioned on the automotive vehicle (e.g. car) frame in proximity to the internal side of the glazing. The system comprises at least one internal vibration sensor and at least one external vibration sensor, i.e. the system may comprise one pair of internal vibration sensor-external vibration sensor or more of such pairs. In the latter case, each pair measure the impact vibration data at a different location of the glazing (e.g. the pairs measure different vibration waves at different locations).

The expression *"impact vibration data"* refers to any data type which may be detected by the sensors that relates to an impact to the glazing. The data may comprise input data (e.g. in the form of a signal measured by the sensors and transmitted to the processing unit) corresponding to the acceleration (i.e. of the wave) as a function of time.

A *"processing unit"* (also referred to as a processing module) refers to a computer system (e.g. of size sufficiently small to be installed in the automotive vehicle, e.g. on or in proximity to the internal side of the glazing) comprising one or more CPU's (central processing units), also referred to as processors, along with memory and programmable input/output variables. The processing unit may be a microcontroller. Alternatively, any suitable hardware-configured means can be considered, such as, for example FGPA, ASICS, and/or PLD. The processing unit may be a compact unit that in turn allows for a neater and more subtle system. For example, a microcontroller can have the advantage of compactness, especially when it comes to integration in the glazing. The one or more CPU are coupled with a memory, the memory having recorded thereon a computer program comprising instructions which, when the program is executed by the processing unit, cause the processing unit to perform the post-processing of the measured impact vibration data. The processing unit also comprises a means for connecting the processing unit to the vibration sensors, e.g. such as an interface where, for each vibration sensor, a wire or a conductive coating wired connection connected to the sensor connects to the processing unit. The means for connecting the processing unit to the sensors may alternatively be a wireless connection means such that the processing unit and the sensors exchange data through wireless connection. The processing unit may be positioned on the glazing, or in proximity to the glazing, but this is not mandatory. The processing unit may be positioned elsewhere on or within the vehicle.

The computer program may comprise instructions executable by a computer, the instructions comprising means for causing the above processing unit to perform the post-processing. The program may be recordable on any data storage medium, including the memory of the processing unit. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Post-processing steps may be performed by a programmable processor executing a program of instructions to perform functions of the post-processing by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the post-processing. The computer program may alternatively be stored and executed on a server of a cloud computing environment, the server being in communication across a network with one or more clients. In such a case a processing unit executes the instructions comprised by the program, thereby causing the post-processing to be performed on the cloud computing environment.

The processing unit may be connected to an external server or computer by a wireless connection means. The processing unit may use such a connection to transfer data, e.g. the data measured by the sensors and/or data processed by the processing unit, to an external server, computer and/or database. This enables the system to serve in Internet of Things (IoT) applications, such as for example, connecting and exchanging with other systems and devices of the vehicle, or other systems and devices external to the vehicle. Such a wireless connection means may include a 4G or 5G chip. The wireless connection means may be configured to transfer data by Hypertext Transfer Protocol (HTTP Port 80). The wireless connection means or wireless connection means including a chip may be positioned on the internal side of the glazing. Alternatively, the wireless connection means or wireless connection means including a chip may be positioned on the external side of the glazing. The wireless connection means may alternatively use other types of data connection such as GPRS (General Packet Radio Service), Bluetooth (for example, connected to the vehicle or to a smartphone) or Wifi.

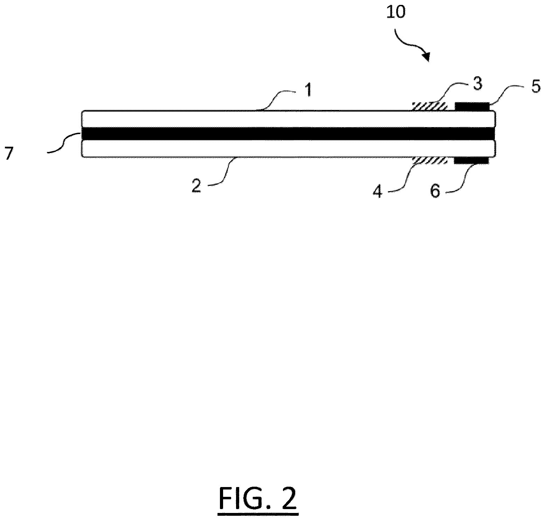

Examples of the system are now discussed with reference to FIG. 2, which shows an example of the system 10. The automotive glazing may be, for example, a windshield or sidelight of a vehicle, or any another glazing of a vehicle. The system 10 comprises an internal vibration sensor 4 which is positioned on an internal surface 2 of the glazing and an external vibration sensor 3 which is positioned on an external surface 1 of the glazing. FIG. 2 also shows a layer 7, which may be made of plastic, between the internal surface 2 and external surface 1 of the glazing. The internal vibration sensor 4 may be positioned symmetrically on the internal surface 2 with respect to the external vibration sensor 3 positioned on the external surface 1. Alternatively, the internal vibration sensor 4 may be positioned asymmetrically on the internal surface 2 with respect to the external vibration sensor 3 positioned on the external surface 1. In any case, the sensors may be close to each other to improve the detection, for example, to avoid false detection. Although not illustrated on FIG. 2, the system 10 may comprise multiple internal vibration sensors 4 and/or multiple external vibration sensors 3. The vibration sensors 3, 4 are configured to measure impact vibration data. Such impact vibration data may include input data corresponding to acceleration as a function of time.

The processing unit 6 may be a microcontroller that is connected to the vibration sensors 3, 4. The processing unit 6 is configured to post-process the measured impact data for impact detection. For example, the processing unit 6 may receive the measured acceleration as a function of time from the internal and external vibration sensors 3, 4 to determine if an impact has been detected on the glazing. The processing unit 6 may compare the impact vibration data from the internal and external vibration sensors 3, 4 not only to more accurately determine if an impact has been experienced by the glazing, but also to determine and benchmark the true value of the vibration on the glazing resulting from an impact, and hence the type of impact experienced, and/or the extent of the damage made to the glazing.

The processing unit 6 may be positioned on or in proximity to the automotive glazing. This may result in a more simplified connection between the processing unit 6 and vibration sensors 3, 4. The positioning the processing unit 6 may also depend on the design and function of the glazing. For example, it may be desired to position the processing unit 6 on the glazing in order to meet certain safety, aesthetic and/or practical preferences. Alternatively, it may for example be desired to position the processing unit 6 in proximity to the glazing in order to maximize available glazing space for other safety, aesthetic and/or practical preferences, such as using the space for other components and/or maximizing visibility for the driver and passengers. This may be beneficial when little space is available on the glazing for multiple components. As displayed in FIG. 2, the processing unit 6 may be positioned on the internal surface 2. This may allow for the processing unit 6 to be protected from external elements and therefore less prone to damage. Although FIG. 2 shows the processing unit 6 positioned on the glazing, this positioning is not mandatory and the processing unit may be positioned in proximity to the glazing or in any other suitable location on or within the vehicle.

Each vibration sensor 3, 4 may be connected to the processing unit 6 by a wire connection or a conductive coating wired connection. In other words, the wired connection may comprise a conductive coating. This may be advantageous in optimizing the overall conductivity of the system. The conductive coating wired connection may be an Ag coating wired connection. Alternatively, the conductive coating wired connection may be any other type of conductive coating wired connection, such as for example, a Cu conductive coating wired connection. Alternatively, the conductive coating wired connection may be a transparent conductive coating wired connection that may be applied to substrates such as glass, such as for example an ITO (indium tin oxide) coating wired connection. A transparent conductive coating wired connection may be advantageous not only from an aesthetic aspect, but also in terms of safety for assisting optimal visibility for the driver. Alternatively, the wired connection may be a wire. Alternatively, the processing unit 6 may be connected to the sensors by a wireless connection and thus receive vibration information data from the sensors 3, 4 via this wireless connection, such as, for example, a Bluetooth connection. The processing unit 6 may be positioned at a location other than on or in proximity to the automotive glazing. The processing unit 6 may be positioned at a different location on or within the vehicle.

The internal vibration sensor 4 (i.e. each internal vibration sensor) and/or the external vibration sensor 3 (i.e. each internal vibration sensor) may be attached on or in proximity to the automotive glazing by any suitable manner for fixing a sensor on or in proximity to a glazing, such as, for example, using a glue to weld the sensor on or in proximity to the glazing, or welding the sensor on or in proximity to the glazing. The internal vibration sensor 4 and/or the external vibration sensor 3 may comprise a conductive coating for electronic connection (for connecting wires or coated wires that are connected to other electronic devices such as, for example, the processing unit, or the power supply). The conductive coating is any coating that is conductive (i.e. any conductive coating that is used for electronic connection, such as, but not limited to, data transfer, power supply, or GND (ground)). The conductive coating may be an Ag coating. Alternatively, the conductive coating may be any other type of conductive coating, such as for example, a Cu conductive coating. Alternatively, the conductive coating may be a transparent conductive coating that may be applied to substrates such as glass, such as for example an ITO coating. A transparent conductive coating may be advantageous not only from an aesthetic aspect, but also in assisting optimal visibility for the driver. If the system 10 comprises multiple internal vibration sensors 4, some or all of the sensors 4 may comprise a conductive coating. Additionally or alternatively, if the system 10 comprises multiple external vibration sensors 3, some or all of the sensors 3 may comprise a conductive coating.

As previously discussed, each internal vibration sensor 4 is positioned, if not on the internal surface of the automotive glazing, in proximity to an internal surface 2 of the automotive glazing. The internal vibration sensor 4 for may for example be positioned on the frame of a vehicle body, such as the frame between the vehicle door and the windshield. Alternatively, the internal vibration sensor 4 for may for example be positioned on the bottom part of a vehicle sidelight (i.e. invisible part inside the door).

As previously discussed, the processing unit 6 may be connected to an external server, computer and/or database by a wireless connection means. The processing unit 6 may be attached on or in proximity to the automotive glazing by a fixing means, such as, for example, a glue or by welding. The processing unit 6 may communicate with other internet components by means of this wireless connection. This enables the system 10 to serve for example in Internet of Things (IoT) applications, such as for example, connecting and exchanging with other systems and devices of the vehicle, or other systems and devices external to the vehicle. For example, the system 10 may communicate with the vehicle ECU (engine control unit) to inform the driver of the health status of the windshield. Such a wireless connection means may include a 4G or 5G chip 5. The wireless connection means may be configured to transfer data by Hypertext Transfer Protocol (HTTP Port 80). Alternatively, the wireless connection means may be configured to transfer data by Hypertext Transfer Protocol Secure (HTTPS). Additionally, whether the system 10 transfers data securely or not, the data may be encrypted, such as, for example, via RSA encryption. As displayed in FIG. 2, the wireless connection means or wireless connection means including a chip 5 may be positioned on the internal side 2 of the glazing. Alternatively, the wireless connection means or wireless connection means including a chip 5 may be positioned on the external side 1 of the glazing. The wireless connection means may alternatively use other types of data connection such as GPRS (General Packet Radio Service), Bluetooth (for example, connected to the vehicle or to a smartphone) or Wifi.

The processing unit 6 is configured to receive impact vibration data from the sensors 3, 4, such as for example, a signal of acceleration as a function of time. During use, the processing unit 6 receives these data. The processing unit 6 may receive one such signal per sensor (e.g. such signal corresponding then to a vibration wave caused by the impact and measured by the sensor) and process these signals to form a single signal representing the acceleration as a function of time. Upon receiving the vibration data, the processing unit 6 then post-processes the vibration data (e.g. the signal of acceleration as a function of time).The post-processing may comprise determining the location of the impact by applying any known method for determining the location of the impact based on the received vibration data, such as, for example, the methodology discussed in Tobias, A. "Acoustic-Emission Source Location in Two Dimensions by an Array of Three Sensors" Non Destr. Test 1976, 9, 9-12.

Additionally or alternatively, the post-processing may comprise determining and/or characterizing the force of the impact experienced by the automotive glass. Additionally or alternatively, the post-processing may comprise determining the risk of the automotive glass breaking. Alternatively, the post-processing may comprise the processing unit sending the data to an external server or computer which then performs the determination determining the location of the impact, determining and/or characterizing the force of the impact, and/or determining the risk of the automotive glass breaking, based on the received vibration data. In other words, upon detection of an impact, the processing unit 6 may transfer all received impact vibration data, such as, for example, acceleration as a function of time to an external server or computer. This external analysis may allow for a more in-depth and/or faster processing of the data with larger computer technologies.

Determining the location of the impact based on the received vibration data is known in the art. An example of a known method for such determination is now briefly discussed. According to this method, determining the impact location may comprise calculating the Fast Fourier Transform (FFT) of the acquired signal in order to calculate, for example, velocity and/or displacement as a function of frequency. Determining the impact location may comprise, using for example a time reversal strategy, modeling and/or reconstructing an impact impulse using a specific point source lamb wave (based on Bessel functions) to localize the impact position onto the glazing. This is advantageous as knowing the location of an impact can be significant to determining the risk of the glazing experiencing a crack.

According to the discussed method, determining the location of the impact may comprise calculating parameters including, but not limited to, the impact location in the Cartesian coordinate system (X, Y), all acquired sensor acceleration time signals before and after impact, the timestamp corresponding to the impact, and/or the frequency location of the maximum of Power Spectral Density. These calculations may compare the data measured by the internal and external sensor 4, 3 and may identify and benchmark vibration impact characteristics such as, and not limited to, the vibration amplitude and the vibration spectra for quantification evaluation.

The vibration sensors and processing unit 6 may be connected to a power supply. The power supply may be configured to provide a power supply of, for example +5 V or +12 V DC. The power supply may for example be one of a readily available power supply (for example, a windshield camera power supply), a local battery, or an energy harvesting system, e.g. based on solar energy or vibration energy. The power supply may be configured to provide power on one side of the glazing, the other side of the glazing being powered through induction. Use of induction can optimize the system 10 as it reduces the need to provide power to both sides of the glazing 1, 2, and reduces need to drill through the glazing to connect the power source to components on both sides of the glazing. The power supply may be positioned on the automotive glazing. Alternatively, the power supply may be positioned on an internal or external surface of the vehicle.

Each vibration sensor 3, 4 (e.g. all of the sensors or at least a part of them), be it an internal one or an external one, may be an accelerometer, such as a micro-electromechanical systems (MEMS) accelerometer, such as for example a variable capacitance accelerometer, or a piezo-resistive accelerometer. Such accelerometer may operate along 1-D, 2-D or 3-D axes. Additionally or alternatively, each sensor 3, 4 (e.g. all of the sensors or at least a part of them) may be a microphone. Additionally or alternatively, each sensor 3, 4 (e.g. all of the sensors or at least a part of them) may be a strain gauge (e.g. directly coated on the glazing with Ag coating). In examples, all vibration sensors of the system 10 are MEMS accelerometers, comprising variable capacitance accelerometers and/or piezo-resistive accelerometers. Alternatively, some of the sensors may be accelerometers, the remaining sensors being microphones and/or strain gauges. Alternatively, all of the sensors may be microphones. Alternatively, all the sensors may be strain gauges. Alternatively, some of the sensors may be strain gauges and some of the sensors may be microphones.

## Claims

1. A system for impact detection (10) on an automotive glazing, the system (10) comprising:
- at least one internal vibration sensor (4) positioned on or in proximity to an internal surface (2) of the automotive glazing and at least one external vibration sensor (3) positioned on an external surface (1) of the automotive glazing, the vibration sensors (3, 4) being configured to measure impact vibration data; and
- a processing unit connected to the vibration sensors (3, 4), the processing unit being configured to post-process the measured impact vibration data for impact detection.

2. The system according to claim 1, wherein the external vibration sensor and/or the internal vibration sensor comprise a conductive coating for electronic connection.

3. The system according to claim 2, wherein the conductive coating is an Ag coating, a Cu coating, or an ITO coating.

4. The system according to any one of claims 1 to 3, wherein the internal vibration sensor is positioned on the frame of an automotive vehicle body.

5. The system according to any one of claims 1 to 4, wherein the processing unit is connected to an external server, computer and/or database by a wireless connection means.

6. The system according to claim 5, wherein the wireless connection means includes a 4G or 5G chip.

7. The system according to claims 5 or 6, wherein the wireless connection means is configured to transfer data by Hypertext Transfer Protocol (HTTP).

8. The system according to any one of claims 1 to 7, wherein the vibration sensors and processing unit are connected to a power supply.

9. The system according to claim 8, wherein the power supply is one of a readily available power supply, a local battery, or an energy harvesting system.

10. The system according to claim 8 or 9, wherein the power supply is configured to provide power on one side of the glazing, the other side of the glazing being powered through induction.

11. The system according to any one of the claims 1 to 10, wherein each vibration sensor is connected to the processing unit by a wire connection or a conductive coating wired connection.

12. The system according to claim 11, wherein the conductive coating wired connection is an Ag coating wired connection, a Cu coating wired connection, or an ITO coating wired connection.

13. The system according to any one of claims 1 to 12, wherein the vibration sensors comprise a microphone and/or a strain gauge and/or an accelerometer, preferably a variable capacitance accelerometer, or a piezo-resistive accelerometer.

14. A method of use of a system according to any one of claims 1 to 13, for impact detection on an automotive glazing, the method comprising:
- by the at least one internal sensor and the at least one external sensor, measuring impact vibration data; and
- by the processing unit, post-processing the measured impact vibration data for impact detection.

15. An automotive glazing system comprising an automotive glazing and a system for impact detection according to any one of claims 1 to 13.

## Patentansprüche

1. System (10) zur Erkennung eines Aufpralls auf einer Fahrzeugverglasung, wobei das System (10) umfasst:
- mindestens einen internen Vibrationssensor (4), der auf oder in der Nähe einer inneren Oberfläche (2) der Fahrzeugverglasung angeordnet ist, und mindestens einen externen Vibrationssensor (3), der auf einer äußeren Oberfläche (1) der Fahrzeugverglasung angeordnet ist, wobei die Vibrationssensoren (3, 4) dazu konfiguriert sind, Aufprallvibrationsdaten zu messen; und
- eine Verarbeitungseinheit, die mit den Vibrationssensoren (3, 4) verbunden ist, wobei die Verarbeitungseinheit dazu konfiguriert ist, die gemessenen Aufprallvibrationsdaten zur Aufprallerkennung nachzuverarbeiten.

2. System nach Anspruch 1, wobei der externe Vibrationssensor und/oder der interne Vibrationssensor eine leitfähige Beschichtung zur elektronischen Verbindung aufweisen.

3. System nach Anspruch 2, wobei die leitfähige Beschichtung eine Ag-Beschichtung, eine Cu-Beschichtung oder eine ITO-Beschichtung ist.

4. System nach einem der Ansprüche 1 bis 3, wobei der interne Vibrationssensor am Rahmen einer Fahrzeugkarosserie angeordnet ist.

5. System nach einem der Ansprüche 1 bis 4, wobei die Verarbeitungseinheit über ein drahtloses Verbindungsmittel mit einem externen Server, Computer und/oder einer Datenbank verbunden ist.

6. System nach Anspruch 5, wobei das drahtlose Verbindungsmittel einen 4G- oder 5G-Chip umfasst.

7. System nach Anspruch 5 oder 6, wobei das drahtlose Verbindungsmittel dazu konfiguriert ist, Daten per Hypertext Transfer Protocol (HTTP) zu übertragen.

8. System nach einem der Ansprüche 1 bis 7, wobei die Vibrationssensoren und die Verarbeitungseinheit an eine Stromversorgung angeschlossen sind.

9. System nach Anspruch 8, wobei die Stromversorgung eines von einer leicht verfügbare Stromversorgung, einer lokalen Batterie oder einem Energiegewinnungssystem ist.

10. System nach Anspruch 8 oder 9, wobei die Stromversorgung dazu konfiguriert ist, eine Seite der Verglasung mit Strom zu versorgen, während die andere Seite der Verglasung durch Induktion mit Strom versorgt wird.

11. System nach einem der Ansprüche 1 bis 10, wobei jeder Vibrationssensor über eine drahtgebundene Verbindung oder eine drahtgebundene Verbindung über die leitfähige Beschichtung mit der Verarbeitungseinheit verbunden ist.

12. System nach Anspruch 11, wobei die drahtgebundene Verbindung über die leitfähige Beschichtung eine drahtgebundene Verbindung über Ag-Beschichtung, eine drahtgebundene Verbindung über Cu-Beschichtung oder eine drahtgebundene Verbindung über ITO-Beschichtung ist.

13. System nach einem der Ansprüche 1 bis 12, wobei die Vibrationssensoren ein Mikrofon und/oder einen Dehnungsmessstreifen und/oder einen Beschleunigungsmesser, vorzugsweise einen Beschleunigungsmesser mit variabler Kapazität oder einen piezoresistiven Beschleunigungsmesser, umfassen.

14. Verfahren zur Verwendung eines Systems nach einem der Ansprüche 1 bis 13 zur Erkennung eines Aufpralls auf einer Fahrzeugverglasung, wobei das Verfahren umfasst:
- Messen von Aufprallvibrationsdaten durch den mindestens einen internen Sensor und den mindestens einen externen Sensor; und
- Nachbearbeiten der gemessenen Aufprallvibrationsdaten zur Aufprallerkennung durch die Verarbeitungseinheit.

15. Fahrzeugverglasungssystem, umfassend eine Fahrzeugverglasung und ein System zur Aufprallerkennung gemäß einem der Ansprüche 1 bis 13.

## Revendications

1. Système pour la détection d'impact (10) sur un vitrage automobile, le système (10) comprenant :
- au moins un capteur de vibrations interne (4) placé sur ou à proximité d'une surface interne (2) du vitrage automobile et au moins un capteur de vibrations externe (3) placé sur une surface externe (1) du vitrage automobile, les capteurs de vibrations (3, 4) étant configurés pour mesurer des données relatives aux vibrations d'impact ; et
- une unité de traitement connectée aux capteurs de vibrations (3, 4), l'unité de traitement étant configurée pour post-traiter les données de vibrations d'impact mesurées en vue de la détection de l'impact.

2. Système selon la revendication 1, dans lequel le capteur de vibrations externe et/ou le capteur de vibrations interne comprennent un revêtement conducteur pour la connexion électronique.

3. Système selon la revendication 2, dans lequel le revêtement conducteur est un revêtement Ag, un revêtement Cu ou un revêtement ITO.

4. Système selon l'une quelconque des revendications 1 à 3, dans lequel le capteur de vibrations interne est placé sur le châssis d'un corps de véhicule automobile.

5. Système selon l'une quelconque des revendications 1 à 4, dans lequel l'unité de traitement est connectée à un serveur externe, à un ordinateur et/ou à une base de données par un moyen de connexion sans fil.

6. Système selon la revendication 5, dans lequel le moyen de connexion sans fil comporte une puce 4G ou 5G.

7. Système selon les revendications 5 ou 6, dans lequel le moyen de connexion sans fil est configuré pour transférer des données par protocole de transfert hypertexte (HTTP).

8. Système selon l'une quelconque des revendications 1 à 7, dans lequel les capteurs de vibrations et l'unité de traitement sont connectés à une alimentation électrique.

9. Système selon la revendication 8, dans lequel l'alimentation électrique est l'une parmi une alimentation électrique immédiatement disponible, une batterie locale ou un système de collecte d'énergie.

10. Système selon la revendication 8 ou 9, dans lequel l'alimentation électrique est configurée pour alimenter un côté du vitrage, l'autre côté du vitrage étant alimenté par induction.

11. Système selon l'une quelconque des revendications 1 à 10, dans lequel chaque capteur de vibrations est connecté à l'unité de traitement par une connexion de fil ou une connexion filaire à revêtement conducteur.

12. Système selon la revendication 11, dans lequel la connexion filaire à revêtement conducteur est une connexion filaire à revêtement Ag, une connexion filaire à revêtement Cu ou une connexion filaire à revêtement ITO.

13. Système selon l'une quelconque des revendications 1 à 12, dans lequel les capteurs de vibrations comprennent un microphone et/ou une jauge de contrainte et/ou un accéléromètre, de préférence un accéléromètre à capacité variable ou un accéléromètre piézorésistif.

14. Procédé d'utilisation d'un système selon l'une quelconque des revendications 1 à 13, pour la détection d'un impact sur un vitrage automobile, le procédé comprenant :
- par l'au moins un capteur interne et l'au moins un capteur externe, la mesure de données relatives aux vibrations d'impact ; et
- par l'unité de traitement, le post-traitement des données de vibrations d'impact mesurées pour la détection de l'impact.

15. Système de vitrage automobile comprenant un vitrage automobile et un système pour la détection d'impact selon l'une quelconque des revendications 1 à 13.
